# EUROPEAN PATENT APPLICATION

(11) **EP 2 551 810 A1**
(43) Date of publication of application: **30.01.2013**
(21) Application number: 11193311.5
(22) Date of filing: 13.12.2011
(51) Int. Cl.: G06Q 10/10, G06Q 40/04

(54) **Method and system for STP linking the variances in corporation action events received from multiple agents**

(30) Priority: 26.07.2011 IN MU21212011
(71) Applicant: Tata Consultancy Services Limited, Maharashtra (IN)
(72) Inventor: Gupta, Devesh, Gurgaon (IN); Agarwal, Rahul, Gurgaon (IN)
(74) Representative: Clark, David Julian

(57) **Abstract**

A method and system for automatic linking of variances captured from plurality of agents or counterparties related to a composite market event from a capital market is disclosed. The method of the present invention enables a creation of golden copy for each of the corporate action event. Based on the matching criteria for each of the corporate action event with the multiple variable data received from the agent/counterparties, the agent variable data is attached to the golden copy created for each event using straight-through processing (STP). As a result of the STP linkage of agent variable events with the golden copy of the event, the agent/counterparty variable information and market composite information for the event is displayed on the single screen to the user.

## Description

### FIELD OF THE INVENTION

The invention generally relates to the field of monitoring and evaluating the corporation action events in a capital market. More particularly, the invention relates to a method and system for automatic linking of variances in the corporate action events received from plurality of agents in the capital market through straight-through processing.

### DEFINITION OF THE TERMS:

**Corporate Action (CA):** A corporate action is an event initiated by a public company that affects the securities (equity or debt) issued by the company. Some of corporate actions include declaration of a dividend, coupon payment, stock splits, sell and purchase of a share that may be directly or indirectly related to the shareholders or bondholders.

**Custody/Custodian:** A custodian, or a custodian bank, sometimes referred as a global custodian bank is a financial institution that has a role of safekeeping assets or securities such as stocks, bonds, commodities such as precious metals and currency (cash) and arrange settlement of any purchases and sales and deliveries in or out of such securities of a company or a firm engaged in a particular business.

**Investment Bank (IB):** An Investment Bank (IB) is a financial institution that helps individuals, corporations and governments in increasing the capital funds by way of acting as the agents of these entities in the issuance of securities. The IB facilitates transactions, market-making, promotion of securities etc for these entities who are considered to be the clients of the IB.

**Counterparty:** A counterparty refers to a person or institution that participates in a financial transaction. Every transaction must have counterparty in order for the transaction to go through. More specifically, every buyer of an asset must be paired up with a seller that is willing to sell and vice versa. For example, a buyer and the seller of a good are the counterparties to the sale of that good.

**Capital Market:** A capital market is a market for securities (debt or equity), where business enterprises (companies) and governments can raise long-term funds. It is defined as a market in which money is provided for periods longer than a year. The capital market includes the stock market (equity securities) and the bond market (debt).

**Straight-through processing (STP):** The entire trade process for capital markets and payment transactions to be conducted electronically without the need for re-keying or manual intervention, subject to legal and regulatory restrictions. The concept has also been transferred into other sectors including energy (oil, gas) trading and banking, and financial planning.

### BACKGROUND OF THE INVENTION

Corporate entities have been actively involved in the transaction related processing of capital markets. Such corporate entities or firms are listed in public stock exchange wherein the stakeholders or shareholders invest their capital funds by purchasing the share for these companies. These capital markets such as public stock exchange are dynamic and fluctuate at a faster rate. Therefore, the parties involved in various transactions related to the capital markets such as corporate entity, shareholders or stakeholders, government agencies need to track the dynamic fluctuation of capital markets.

One of the key components that affect such fluctuation in the capital market is a corporate action event. A corporate action event occurs when a company's capital structure or financial position changes, affecting a security, such as stock, issued by that company. Company stock buy-backs, elective dividends, tender offers, corporate mergers, stock splits, redemptions, spin-offs, rights issues, and periodic income payments are a few examples of the almost 1 billion corporate action events that occur in a single year worldwide.

A typical corporate action for example may be related to sale or purchase of shares of a particular company by different stakeholders or clients investing in the capital market. If the share of the said company falls, a corporate action event in the form of announcement will be delivered to the shareholders, custodians and Investment Banks. All of these collectively perform the task of processing of the received corporate action events.

Today, as the information technology has grown in leaps and bounds, the proceedings of the stock exchange markets have been implemented using computer-based systems for processing of the various corporate action events. That is the entire tracking and evaluating of various corporate action events in the capital market is now made feasible using computer-based systems. As a result of such systems and accordingly the online facilities support, the clients or shareholders or investors have the feasibility to view the status of their shares and securities they hold of the particular company by way of investing in capital markets.

The processing of various corporate action events is done by investment Banks or a Custodian bank. Such Custodian bank or Investment Bank performs the task of tracking or monitoring the events related to corporate actions. Generally, a typical corporate action processing requires the investment banks to deal with multiple custodians as well as with multiple counter parties.

All these different parties have their own deadlines and options which are required to be captured and used in further processing of the actual corporate action events. These corporate action events may involve processing of various complex tasks in order to process each event such that an appropriate action is taken to avoid any further damage to business considerations. Hence, the significant task while processing the event to correctly identify the event and take further steps to avoid any business loss. The custodians, Investment Bankers, stakeholders thus need to communicate collaboratively to process the corporate events generated.

Event information related to the corporate action event may include market data coming from various market vendors such as Telekurs, Finanacial Times etc. For each of the corporation action event, there may be multiple variable data received from multiple agents or counterparties or depositories. Such variable data may refer to variances in various actions from multiple agents or counterparties such as deadline dates, status, and sell or purchase of shares details etc. These variances in event need to be captured for efficient processing of the various events that are received through capital markets.

As there are multiple agents or counterparties responsible for providing variances in data related to different variety of corporate action events, the computer-based system managing these transaction should be well structured and organized such that both the market data captured related to a specific corporate action event and the agent variable data for the said corporate action event is correlated efficiently in order to process the event accordingly. That is, it is necessary to map each of the corporate action events with the corresponding agents or counterparties variable data in order to avoid any discrepancy among multiple events in the market thereby leading to errors in processing of the events.

In the background art, any global custodian or an investment bank with operations in multiple markets interfaces with multiple counterparties such as data providers or agents or depositories to enable them capture a golden copy of the corporate action event. At the receipt of such golden copy for the specific event, these counterparties manually attach the variable data related to event received to form an enriched copy containing the variance information. The said enriched golden copy containing variance information captured from different counterparties is then published to the interested parties or underlying shareholders.

Alternatively in the background art, the IT (Information Technology) system supporting the client business captures the golden copy from the first data provider or an agent and later the OPS (Operations) user manually attaches the agent or depot specific variances to the captured golden copy. The manual attachment is done by the operations user by referring some disparate non-integrated information resources such as spreadsheet, excel-files, and databases etc. The differences in event details including option details, option deadlines to place instructions received from agents are further used to streamline the incoming and outgoing responses amongst the bank, the underlying shareholders and the paying agents.

Thus, the existing system support the linking of market data related to corporate action events with its variable agent data from geographically dispersed agents worldwide by means of manually attaching the variances to the golden copy of the specific corporate action event.

However, the present scenario of handling corporate events variable agent data and linking these to the specific corporate action event leads to several operational issues due to following limitations:
- The existing systems of capturing the variances in event details received from multiple data providers or vendors or agents are manual.
- The existing systems are effort consuming and therefore require more resources, time, and expenditure cost.
- The existing systems due to manual and effort consuming are therefore prone to errors and hence may affect the quality of information disseminated to the clients or stakeholders.

As will be appreciated, there is a long felt need for an improved method and system for automating process of capturing of variable data related to corporate action events received from plurality of agents or depositories in the capital market on account of initially captured market data in the form of announcement capture for a specific corporate action event.

### OBJECTS OF THE INVENTION

The principal object of the present invention to enable a method and system for automatic linking of variances captured from multiple agents related to a corporation event data to a golden copy of the said event.

Yet another object of the invention is to enable a method and system for capturing a composite market event related to corporate action from a market vendor.

Yet another object of the invention is to enable a method and system for scrubbing and validating the captured composite market event.

Yet another object of the invention is to enable a method and system for storing the scrubbed and validated composite market event in a golden copy.

Yet another object of the invention is to enable a method and system for receiving variable agent data related to the market composite event.

Yet another object of the invention is to enable a method and system for determining matching criteria for the variable agent data with the stored scrubbed and validated composite market event in the golden copy.

Yet another object of the invention is to enable a method and system for attaching the variable agent data to the scrubbed and validated composite market event in the golden copy based on determined matching criteria.

Still another object of the invention is to enable a method and system for automatic linking the attached variable agent data with the stored scrubbed and validated composite market event in the golden copy through straight-through processing (STP).

### SUMMARY OF THE INVENTION

Before the present methods, systems, and hardware enablement are described, it is to be understood that this invention is not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention.

The present invention provides a method and system for automatic linking of event variances received from the multiple agents or depositories to a golden copy of the said event through straight-through processing (STP).

The method proposed in the present invention enables to perform the steps of:
a) Capturing composite market event related to corporate action from at least one market vendor.
b) Scrubbing and validating the said captured composite market event.
c) Storing the said scrubbed and validated composite market event in the said golden copy.
d) Receiving incoming messages comprising variances in the said stored composite market from agents active in the same market.
e) Generating variable agent data for the said received incoming messages.
f) Determining matching criteria for the said generated variable agent data with the stored composite market event in the said golden copy.
g) Attaching the variable agent data to the stored scrubbed and validated composite market event in the golden copy based on the said determined matching criteria. And
h) Linking the attached at variable agent data with the stored scrubbed and validated composite market event in the golden copy through straight-through processing.

The system of the proposed invention comprises:
a) Capturing means to capture composite market event related to corporate action from market vendor.
b) Scrubbing and validating module to scrub and validate the said captured composite market event.
c) A golden copy module to store the said scrubbed and validated composite market event.
d) Receiving module to receive incoming messages comprising variances in the said stored composite market from agents active in the same market.
e) Generating module to generate variable agent data for the said received incoming messages.
f) Determining module to determine matching criteria for the said generated variable agent data with the stored composite market event in the said golden copy.
g) STP module to link the variable agent data with the stored composite market event in the golden copy module.

### BRIEF DESCRIPTION OF DRAWINGS

The foregoing summary, as well as the following detailed description of preferred embodiments, is better understood when read in conjunction with the appended drawings. For the purpose of illustrating the invention, there is shown in the drawings example constructions of the invention; however, the invention is not limited to the specific methods and architecture disclosed in the drawings:
Figure 1 is a system block diagram **100** illustrating the STP attachment of agent variable data to the golden copy of the event according to an exemplary embodiment of the invention.
Figure 2 illustrates a system architecture diagram **200** for linking the agent variable data captured from plurality of agents to a golden copy of the event in the capital market in accordance to an exemplary embodiment of the invention.
Figure 3, 4, 5, 6, 7 and 8 illustrates the Graphical User Interfaces (GUIs) displaying the variances captured from multiple agents or counterparties in accordance to an exemplary embodiment of the invention.
Figure 9 illustrates a flow chart **900** depicting the steps followed for linking the agent variable data captured from plurality of agents to a golden copy of the event in the capital market in accordance to an exemplary embodiment of the invention.

### DETAILED DESCRIPTION:

The description has been presented with reference to an exemplary embodiment of the invention. Persons skilled in the art and technology to which this invention pertains will appreciate that alterations and changes in the described method and system of operation can be practiced without meaningfully departing from the principle, spirit and scope of this invention.

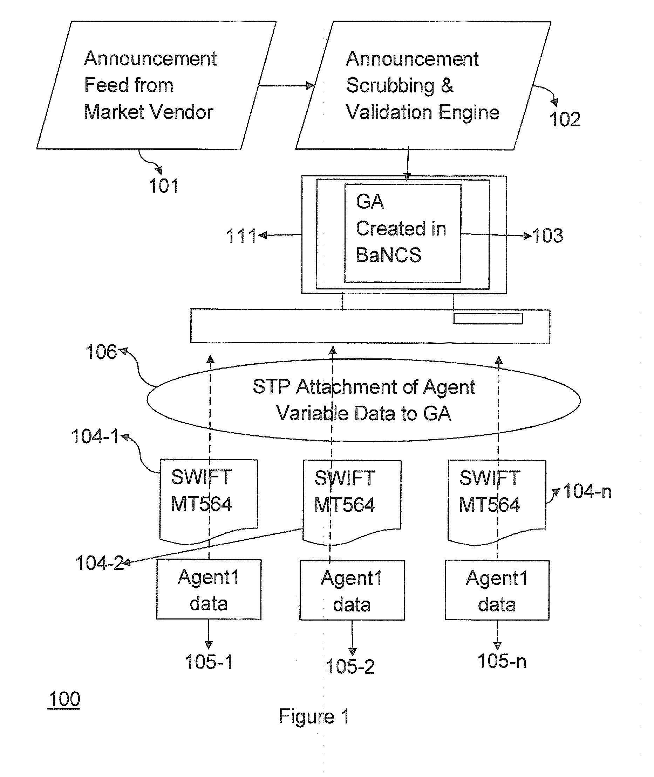

Referring to figure 1 is a block diagram **100** illustrating the STP attachment of agent variable data to the golden copy of the event according to an exemplary embodiment of the invention.

As illustrated in figure 1, a typical corporation action processing framework in the capital markets is shown. An announcement feed **101** from market vendor is received at a scrubbing and validation engine **102.** The announcement feed **101** is event information that is captured from different market vendors for at least one corporate action event called "Market Composite Event". The examples of various market vendors include financial times, Telekurs, CNBC TV etc. The event information captured from these vendors is referred to as market data.

The received "market composite event" is scrubbed and validated using scrubbing and validation engine **102.** Post scrubbing and validation, a golden copy (GA) **103** for the corporate action event is created and stored on a central financial-asset management server **111** as illustrated in figure 1. The central financial-asset management server **111** is configured to receive plurality of corporation action events from the capital market and their further processing. In an embodiment of the present invention, the said central financial-asset management server **111** may be any device capable of wireless or wire line communication, including, but not limited to a computer, laptop, mobile phone, smart phone, cell phone, satellite phone, walkie-talkie, handheld device, personal digital assistant (PDA), mobile network appliance, or an email, instant messaging, or chat device.

The central financial-asset management server **111** may be maintained by an Investment (IB) or Custodian Bank responsible for capturing and processing the multiple corporate action events. The Investment Bank or the Custodian Bank has to deal with multiple agents or depositories or counterparties while processing the corporate action events. Such plurality of agents or depositories or counterparties servers **105-1, 105-2...105-n** have been illustrated in figure 1.

In an embodiment, these agent servers are connected to the Investment Bank or Custodian bank hosting the central financial-asset management server 111 using communication protocols such as including but not limited to WAN, LAN, MAN, Internet and combinations thereof. In some embodiments, the multiple agents **105-1, 105-2...105-n** may be centrally located or geographically dispersed and may be locally or remotely interconnected.

These agents generate variance information related to multiple corporate action events captured in the capital markets. For example, as illustrated in figure 1, the multiple agent servers **105-1, 105-2...105-n** generate variance information related to the received market composite event in the form of multiple SWIFT MT564 messages **104-1, 104-2...104-n.** These messages are parsed to generate agent variable data for each of the received message variances from plurality of agents. This data is related to the at least one of the multiple "Market Composite Event" created and stored in the golden copy of the said event created in the central financial-asset management server **111.**

The agent variable data generated for each of the received SWIFT MT564 messages **104-1, 104-2...104-n** are then linked to the corresponding corporate action composite events stored in the golden copy by attaching the data created to the market composite events through straight-through processing (STP) **106.**

That is, for each of the multiple market composite events, the agent variable data is attached to the particular golden copy of the specific event automatically. Such attachment is done by provision of configurable linking and matching criteria for all supported events for each market and the operating data providers or agents in the given market.

### BEST ENABLEMENT MODE:

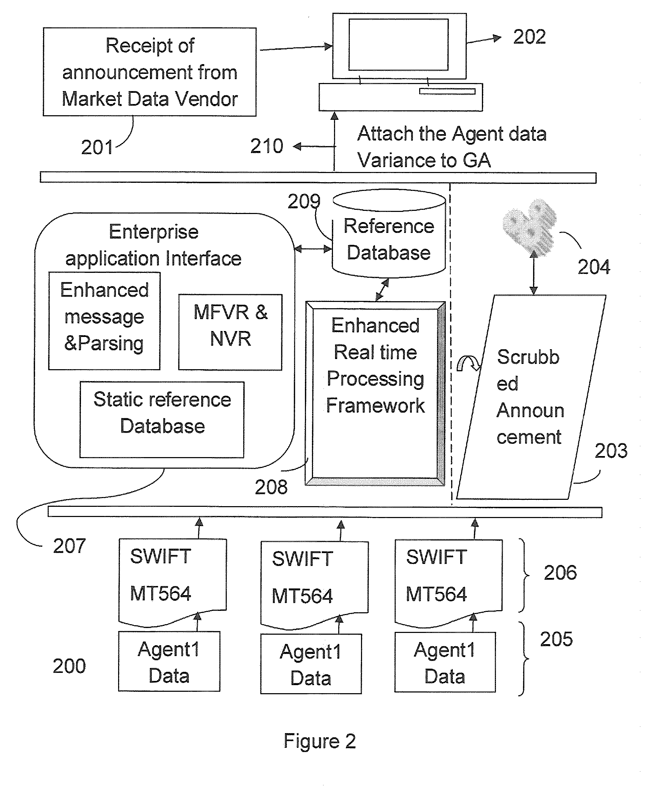

The best enablement mode of the present invention will now be described by referring to figure 2. Figure 2 shows a system architecture diagram **200** for linking the agent variable data captured from plurality of agents to a golden copy of the event in the capital market in accordance to an exemplary embodiment of the invention.

In accordance to this exemplary embodiment, as illustrated in figure 2, a corporate action event feed announcement **201** is received from the market vendor. The announcements may be for example rise or fall of a share of a company A. Similarly, other corporate action events may be received from the market vendors.

An Investment Bank or Custodian Bank (IB) server is involved in processing of the multiple corporate action events. Thus, a central financial management server 202 of the Investment Bank (IB) is configured to capture the received market event feed for each of the events. Further, a golden copy is created storing the composite market event for each of the received market feed event information from the market vendors. The said golden copy is stored in the central financial management server **202** of the Investment Bank or Custodian Bank.

The received announcement feed is further scrubbed by a scrubbing module **203** to scrub the said corporate action event using business rule engine **204** to form a scrubbed announcement feed for the received market event information from the market vendor. The scrubbing is used for analysis of the received market event to identify its origin and its relation or linkage with business processes in context to capital market transactions.

An enhanced business rule engine **204** comprises business rules for scrubbing the announcement as illustrated in figure 2. Further, the business rule engine **204** comprises business rules for devising matching criteria for all supported events related to each market and the operating data providers in the given market. The business rule engine **204** comprises multiple matching rules for mapping the plurality of corporate action events with the generated agent variable data. The agent or counterparty variable data may include information such as deadline date, balance, account and other information for each of the multiple corporate action events.

Thus, the enhanced business rule engine **204** stores rules and policies for mapping multiple agent variable data to the market composite events captured through market announcements stored in the form of a golden copy for each individual event on the central financial management server **202.** For example, it may determine type of corporate action event, affected customers or stakeholders, source of information such as Telekurs or financial times or other market-specific news channels, and the agents or depositories etc.

The Investment Bank central financial management server **202** has to deal with multiple agents or depositories or counterparties while processing of any corporate action event. As illustrated in figure 2, several agent servers **206-1,206-2....206-n** are shown that are electronically coupled to the central financial management server **202.** The variance information in the form of multiple SWIFT MT564 messages is received from these servers to the central financial management server **202.** These variance messages are utilized to generate multiple agent data **205-1, 205-2.....205-n** related to multiple corporate action events received in the capital market.

Now, the generated agent variable data is mapped to the scrubbed event **203** by utilizing various modules including an enterprise application interface module **207,** a reference database module **209** and an enhanced real-time processing framework **208** collectively. The enterprise application interface module **207** comprises an enhanced message parser and set of parsing rules stored in either some relational database **209** or some reference files maintained internally.

Upon receipt of any SWIFT message, the information is first passed through this layer to confirm the syntactical and semantically compliance, by referring the message format validation rule (MFVR) and Network Validation Rules (NVR). If the message passes the confirmation check, it is further passed on to application module to enhanced business rule engine **204** as illustrated in figure 2 for applying the business rules else rejected at enterprise application interface (EAI) module **207** itself.

The reference database **209** comprises processing rules which are referred during message scrubbing process to check if the message confirms to the various structuring rules. The said reference database **209** may include information about the rules, policies, and frameworks for multiple corporation events and the related variance data for each of the events.

Based on the analysis by the enterprise application interface module **207,** each of the SWIFT MT564 messages as a result of analysis generate agent variable data that is captured and processed by enhanced real-time processing framework **208.**

The agent variable data then needs to be distinguished so that it can be linked to the corresponding market composite event that is captured from the market vendors and stored in the golden copy created in the central financial management server **202.** The task is to organize the corporate action event information in the central financial management server at the Investment Bank location to capture and distinguish between announcement market and announcement variable data received from the various underlying agents and counterparties.

Further, a configurable linking of each of the agent variable data received from at least one agent to the golden copy of the event is done by straight-through processing (STP). For this, the agent variable data mapped with the corresponding event is attached to the golden copy created for the said event. The central financial management server **202** displays the captured agent or counterparty variable information and the market composite information on a single screen. Thus, the stored variances for each of the market composite event are displayed on the screen attached to the said market composite event.

The screen provide placeholders for agent and Counterparty options, Counterparty and agent deadline date, Balance, Safekeeping Account and default options, Counterparty deadline level, position type, & trade Id. Various provisions available on this screen are:
- Facility to manually amend missing agent variable information like Balance and Safekeeping Account is provided on screen if this information is missing in agent variable information.
- Facility to manually capture Counterparty variable information is provided.
   Capturing of Counterparty deadline dates can logically start once the stock record has been pulled for the event.

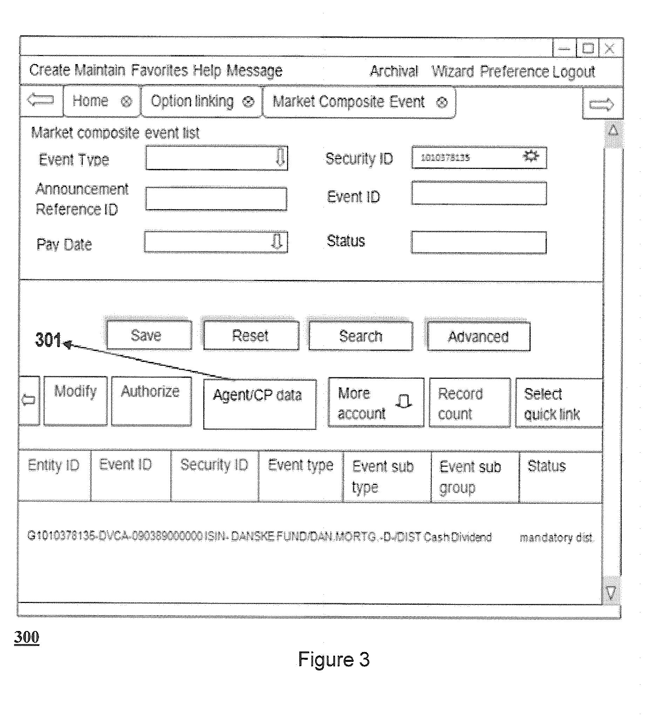

Referring to figures 3, 4, 5, 6 and 7 are the data displayed on the screen of the central financial management server to the user for viewing the variances captured from multiple agents/counterparties according to exemplary embodiment of the invention.

Figure 3 illustrates a graphical user interface **300** displaying details regarding market composite events. As illustrated, the said GUI **300** displays the market composite event list to the user. Further, various options such as event type, event ID, pay date, announcement reference ID and security ID are displayed to the user. The user, if interested can enter the specific values to select a specific event to retrieve the details for the selected event on the GUI **300.**

As illustrated in figure 3, the GUI **300** comprises an "Agent/CP Data" button **301** by means of which the user is able to select the variances in data related to a particular composite market event from multiple agents or counterparties to be displayed on the GUI.

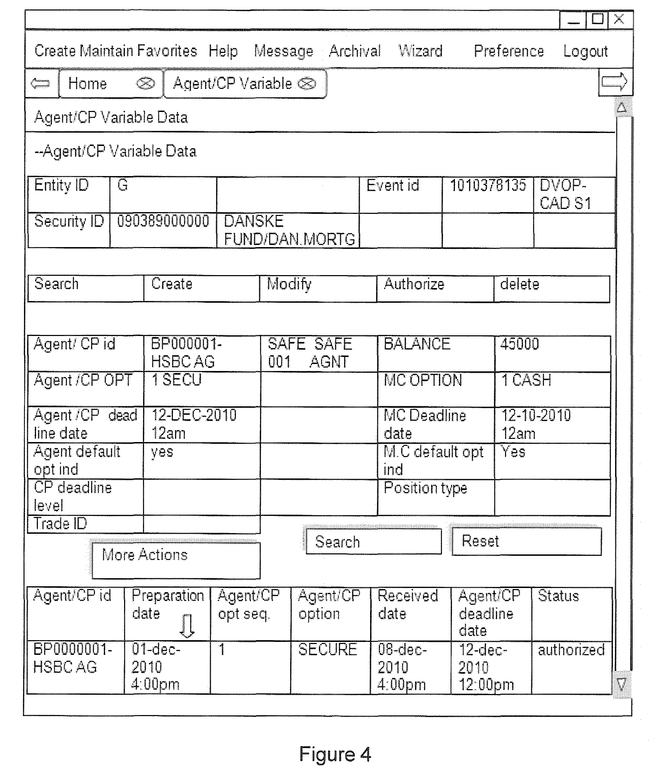

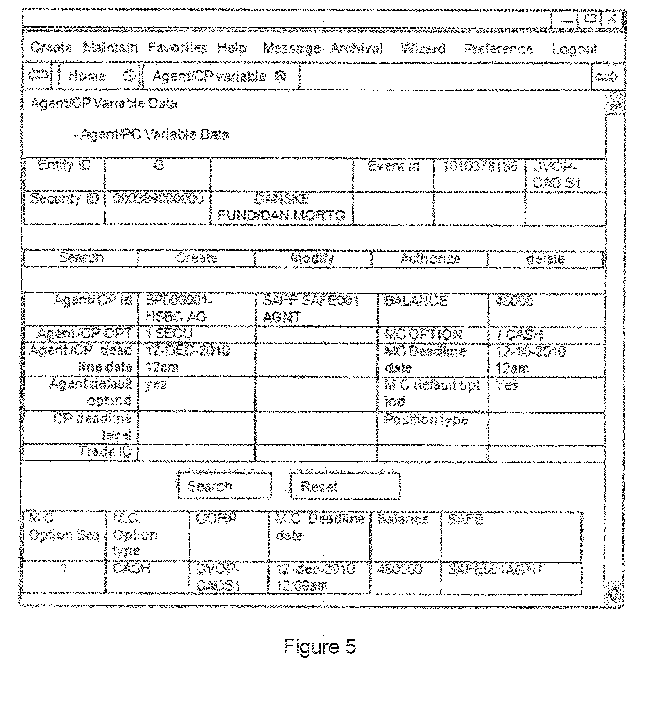

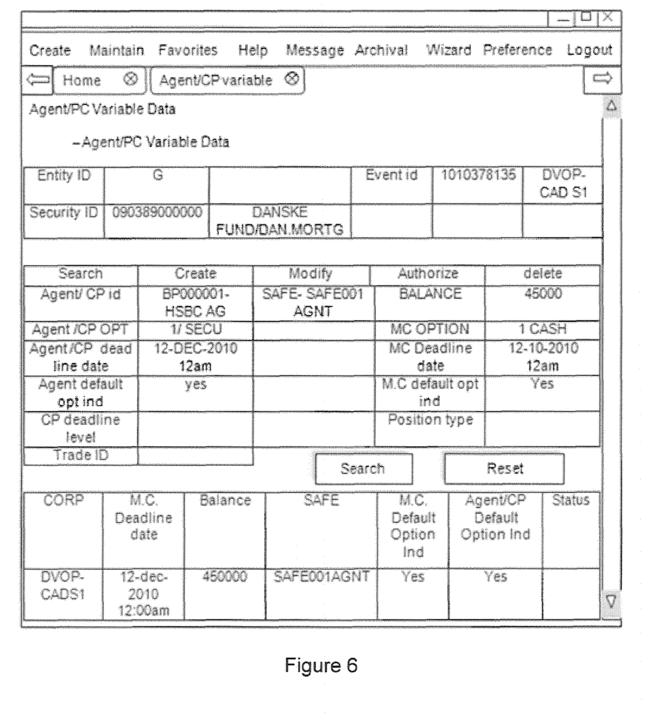

As a result of clicking the "Agent/CP Data" button **301,** variable information from the plurality of agents or counterparties is made accessible to the user on a new screen providing details of the selected agent/counterparty variable data. This is illustrated in figures 4, 5, 6 and 7. As can be seen in the figure 4, the various agent or counterparty having unique IDs and their variance data for the specific event selected is displayed on the screen. Figure 5 and figure 6 further illustrates market composite options for the particular event for the multiple agent variable data.

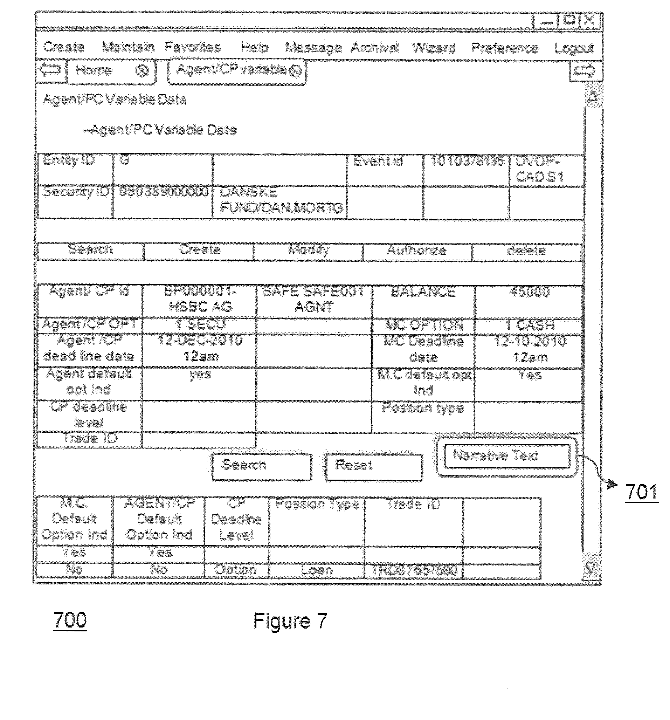

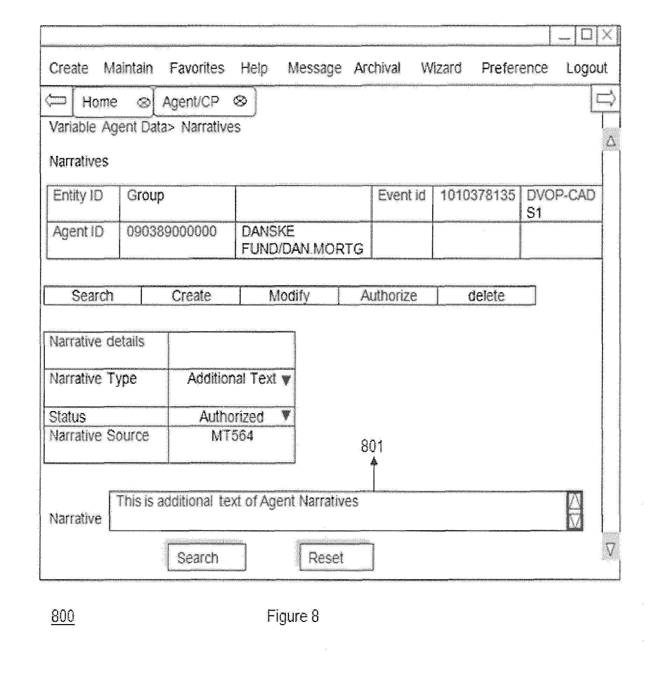

Figure 7 illustrates a Graphical User Interface (GUI) **700** displaying the agent counterparty variable information for the particular corporate action event. Further, the user is provided with a narrative text button **701** by clicking which the narrative text for the agent variable data is displayed on the screen as shown in figure 8. Figure 8 illustrates a GUI **800** displaying the narrative text **801** describing additional details of the variance information for the selected agent or counterparty.

As can be observed from the figures 4,5,6,7 and 8, the central financial management server graphical user interface is configured to operate in three different modes namely create mode, modify mode and authorize mode respectively. These can be seen in each of these figures displaying agent/counterparty variance data on the screen. The functionalities of operating in these modes are explained as below:
**Create Mode:** In this mode both agent and Counterparty variable information can be captured in the user interface module with following specifications:
   - Agent/Counterparty Id, Counterparty deadline level and Counterparty deadline date is mandatory displayed fields in the screen.
   - List of Value (LOVs) for Counterparty Id and Trade Id is provided.
   - When positions are not fetched for the agent/counterparty, then agent/Counterparty Id and Trade Id LOV will show 'no records'.
   - Depending on the Counterparty deadline level selected, fields will be dynamically available in editable mode or read only mode. e.g. - Option Sequence field will be editable only when Counterparty deadline level selected will be "Option".
**Modify Mode:** The user interface module provides this option, although there will be rare scenarios where variable data is needed to be modified. By using this mode,
   - User will be able to amend Safekeeping Account and Balance if they are not specified by agent.
   - Record once modified will be updated to 'Modified' status and will be subjected
      to 4-eye authorization before fmally getting updated to authorized status.
**Authorize Mode:** The authorize operation will be available only for records which are in 'To Be Authorized' status. In authorize mode all attributes on the screen will be available only in read only mode. No field will be editable in authorize mode. If authorizer rejects the selected record then status will be updated to 'Authorization Rejected'. If authorizer releases the selected record then status will be updated to 'Authorized'.

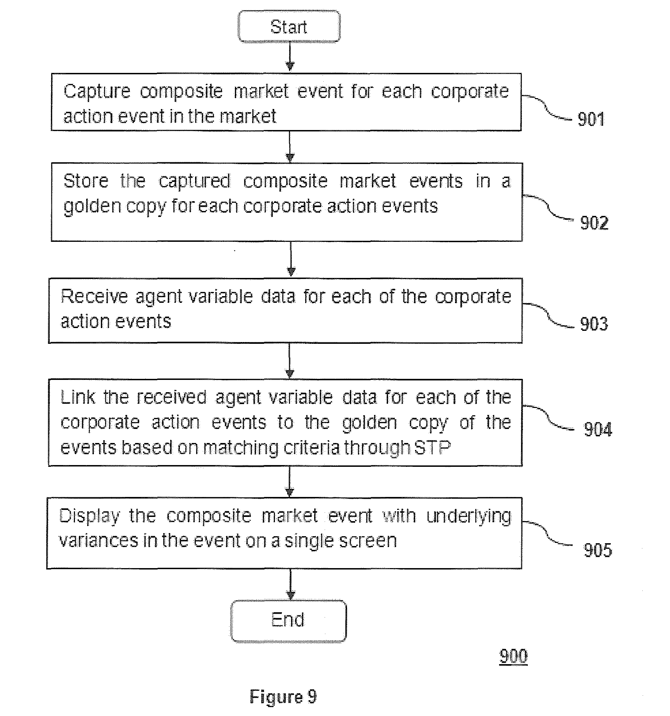

Referring to figure 9 is a flow chart **900** depicting the steps followed linking the agent variable data captured from plurality of agents to a golden copy of the event in the capital market in accordance to an exemplary embodiment of the invention.

At step **901,** capturing of composite market event for each corporate action event in the market is done.

At step **902,** the captured composite market events for each corporate action events are stored in a golden copy.

At step **903,** agent variable data for each of the corporate action events is received.

At step **904,** the received agent variable data for each of the corporate action events are linked to the golden copy of the events based on matching criteria through STP.

At step **905,** the composite market events with underlying variances in the event are displayed on a single screen.

The methodology and techniques described with respect to the embodiments can be performed using a machine or other computing device within which a set of instructions, when executed, may cause the machine to perform any one or more of the methodologies discussed above. In some embodiments, the machine operates as a standalone device. In some embodiments, the machine may be connected (e.g., using a network) to other machines. In a networked deployment, the machine may operate in the capacity of a server or a client user machine in a server-client user network environment, or as a peer machine in a peer-to-peer (or distributed) network environment. The machine may comprise a server computer, a client user computer, a personal computer (PC), a tablet PC, a laptop computer, a desktop computer, a control system, a network router, switch or bridge, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein.

The machine may include a processor (e.g., a central processing unit (CPU), a graphics processing unit (GPU, or both), a main memory and a static memory, which communicate with each other via a bus. The machine may further include a video display unit (e.g., a liquid crystal display (LCD), a flat panel, a solid state display, or a cathode ray tube (CRT)). The machine may include an input device (e.g., a keyboard) or touch-sensitive screen, a cursor control device (e.g., a mouse), a disk drive unit, a signal generation device (e.g., a speaker or remote control) and a network interface device.

The illustrations of arrangements described herein are intended to provide a general understanding of the structure of various embodiments, and they are not intended to serve as a complete description of all the elements and features of apparatus and systems that might make use of the structures described herein. Many other arrangements will be apparent to those of skill in the art upon reviewing the above description. Other arrangements may be utilized and derived there from, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

The preceding description has been presented with reference to various embodiments of the invention. Persons skilled in the art and technology to which this invention pertains will appreciate that alterations and changes in the described structures and methods of operation can be practiced without meaningfully departing from the principle, spirit and scope of this invention.

### ADVANTAGES OF THE INVENTION

The present invention has following advantages:
- The present invention supports the STP linkage of agents or depositories events with golden copy of the event automatically.
- The present invention enables saving time, effort and cost incurred in manual linking of event detail received from multiple agents.
- The present invention support simultaneous display of variances in event details and the corresponding composite market event for the variances on a single screen.

## Claims

1. A system for real-time linking at least one corporate action event (201) received on a central financial-asset management server (202) to at least one agent variance message received from at least one agent server (206) electronically coupled to the said central financial-asset management server in a capital market framework, the system comprising:
a) a scrubbing module (203) to scrub the said corporate action event using business rule engine (204);
b) a golden copy means in the central financial-asset management server (202) to store the said scrubbed corporate action event;
c) a generating module (205) to generate at least one agent variance data from the variance message (206);
d) an enterprise application interface module (207), real-time processing framework (208) and a reference database (209) to match the said generated variance data with the stored corporate action event; and
e) a straight-through processing module (210) to link the matched agent variable data to the corporate action event stored in the said golden copy means.

2. A system of claim 1, wherein the said corporate action event may be received from at least one market vendor server such as financial institute server, financial news media server or combinations thereof.

3. A system of claim 1, wherein the said at least one variance message may be received from at least one agent server such as counterparty server, depository server, custodian server, data provider server or combinations thereof.

4. A system of claim 1, wherein the said at least one central financial-asset management server may be included from a group comprising an investment bank (IB) server, a custodian bank server or combinations thereof.

5. A system of claim 1, wherein the said enterprise application interface module (207), real-time processing framework (208) and a reference database (209) comprises various rules, policies and algorithms related to matching the said corporate action event to the agent variance data.

6. A system of claim 1, wherein the central financial-asset management server further comprising a display means for displaying the linked agent variance data to the corporate action event.

7. A method for real-time linking of at least one variance message received from at least one agent server (104) related to at least one corporate action event (101) received on at least one central financial-asset management server (111), the method comprising:
a) scrubbing and validating (102) the said received corporate action event;
b) storing the said scrubbed and validated corporate action event in a golden copy (103) related to the at least one event;
c) generating at least one agent variance data (105) from the said received variance message (104);
d) matching the generated variance data to the corporate action event stored in the said golden copy; and
e) linking (106) the matched agent variable data to the corporate action event stored in the golden copy by means of straight-through processing.

8. A method of claim 7, wherein the said corporate action event may be received from at least one market vendor server such as financial institute server, financial news media server or combinations thereof.

9. A method of claim 7, wherein the said variance message may be received from at least one agent server such as counterparty server, depository server, custodian server, data provider server or combinations thereof.

10. A method of claim 7, wherein the said financial-asset management server may be included from a group comprising an investment bank (IB) server, a custodian bank server or combinations thereof.

11. A method of claim 9, wherein the variance message may be received in the form of a SWIFT MT564 message.

12. A method of claim 7, wherein the generated variance data includes from a group comprising option details, option deadlines, balance, safekeeping account, deadline dates or combinations thereof related to the said at least one corporate action event.

13. A method of claim 7, wherein the matching of generated agent variable data to the stored corporate action event in the said golden copy is implemented using a rule based framework and a reference database comprising various matching rules, policies and algorithms.
